# FASCICULE DE BREVET EUROPEEN

(11) **EP 3 083 793 B1**
(45) Date de publication et mention de la délivrance du brevet: **07.04.2021**
(21) Numéro de dépôt: 14828231.2
(22) Date de dépôt: 17.12.2014
(51) Int. Cl.: C08K 3/34, C08K 3/38, C08L 71/00

(54) **COMPOSITION DE POUDRES DE POLY-ARYLENE-ETHER-CETONE-CETONES AUTORISANT UN EXCELLENT COMPROMIS COULABILITE ET COALESCENCE ADAPTEES AU FRITTAGE LASER**
PULVERZUSAMMENSETZUNG VON POLYARYLENETHERKETON-KETONEN ZUR HERVORRAGENDEN GIESSBARKEIT/KOALESZENZBALANCE FÜR LASERSINTERN
POWDER COMPOSITION OF POLYARYLENE ETHER KETONE KETONES ALLOWING AN EXCELLENT CASTABILITY/COALESCENCE BALANCE SUITABLE FOR LASER SINTERING

(30) Priorité: 20.12.2013 FR 1363201
(43) Date de publication de la demande: 26.10.2016
(73) Titulaire: Arkema France, 92700 Colombes (FR)
(72) Inventeur: BRULE, Benoît, F-27170 Beaumont-le-Roger (FR); STER, Hervé, F-27470 Serquigny (FR); MATHIEU, Cyrille, F-69007 Lyon (FR); DECRAEMER, Nadine, F-27170 Beaumontel (FR)
(74) Mandataire: Arkema Patent
(86) Numéro de dépôt international: PCT/FR2014/053386
(87) Numéro de publication internationale: WO 2015/092272

(56) Documents cités:
- EP-A1- 1 674 497
- WO-A1-2013/068686
- DE-A1-102007 016 656
- US-A1- 2009 280 263
- US-A1- 2011 039 093

## Description

La présente invention concerne une composition comprenant de 99.6 à 99.99 % en poids d'au moins une poudre d'au moins une poly-arylène-éther-cétone et 0.01 à 0.4% en poids d'un agent d'écoulement hydrophile. Cet agent d'écoulement hydrophile est caractérisé par une prise de masse (quantité d'eau absorbée) après 5 jours de conditionnement à une humidité relative de 95% supérieure à 0.5%. Cette prise de masse de l'agent d'écoulement est déterminée par mesure Karl Fisher après désorption de l'eau par un traitement de 15 min à 170°C. Cette composition est adaptée au frittage laser. Elle autorise en particulier un excellent compromis coulabilité et coalescence de la poudre.

Les poly-arylène-éther-cétones et plus particulièrement les Poly éther-cétone-cétones (PEKK) sont des matériaux très performants. Ils sont utilisés pour des applications contraignantes en température ou/et en contraintes mécaniques, voire chimiques. On retrouve ces polymères dans des domaines aussi variés que l'aéronautique, les forages off shore, les implants médicaux. Ils peuvent être mis en oeuvre par moulage, extrusion, compression, filage, ou encore frittage laser notamment. Cependant, leur mise en œuvre dans ce dernier procédé nécessite des conditions de préparation de la poudre assurant une bonne coulabilité permettant la mise en œuvre dans le procédé de frittage laser tel que décrit ci-dessous.

La technologie de frittage de poudres sous un faisceau laser sert à fabriquer des objets en trois dimensions tels que des prototypes, des modèles, mais aussi des pièces fonctionnelles, notamment dans les domaines automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage.

On dépose une fine couche de poudre sur une plaque horizontale maintenue dans une enceinte chauffée à une certaine température. Le laser apporte l'énergie nécessaire à fritter les particules de poudre en différents points de la couche de poudre selon une géométrie correspondant à l'objet, par exemple à l'aide d'un ordinateur ayant en mémoire la forme de l'objet et restituant cette dernière sous forme de tranches. Ensuite, on abaisse la plaque horizontale d'une valeur correspondant à l'épaisseur d'une couche de poudre (par exemple entre 0,05 et 2 mm et généralement de l'ordre de 0,1 mm) puis on dépose une nouvelle couche de poudre. Le laser apporte l'énergie nécessaire à fritter les particules de poudre selon une géométrie correspondant à cette nouvelle tranche de l'objet et ainsi de suite. La procédure est répétée jusqu'à ce que l'on ait fabriqué tout l'objet.

Dans ce procédé de frittage de poudres sous un faisceau laser, il est impératif de disposer de poudres qui présentent une bonne coulabilité, ce qui permet une bonne mise en couche desdites poudres. Par ailleurs, une bonne coalescence de la poudre est nécessaire après la fusion induite par le laser, de telle sorte que les propriétés mécaniques des objets fabriqués soient maximisées.

Il est donc cherché des poudres ayant, d'une part, une bonne coulabilité et, d'autre part, une bonne coalescence durant le procédé de frittage.

Dans le domaine du frittage laser, il est usuel d'ajouter des agents d'écoulement pour améliorer la coulabilité des poudres.

US 2004/0204531 décrit l'intérêt dans le polyamide des silices hydrophobes versus des silices hydrophiles. En effet, la coulabilité est détériorée après reprise d'humidité dans le cas de l'utilisation de silices hydrophiles alors qu'elle est inchangée dans le cas de l'utilisation de silices hydrophobes.

Dans le domaine des poly-arylène-éther-cétones (PAEK), la coulabilité est connue pour être améliorée en utilisant un traitement thermique approprié.

US7847057 concerne un procédé de traitement thermique de poudres de poly-arylène-éther-cétones consistant à exposer la poudre à un traitement thermique supérieur à 30 minutes à une température supérieure de 20°C à la température de transition vitreuse du polymère.
Ce traitement appliqué sur des Poly-éther-éther-cétones (PEEK) permet d'obtenir des poudres de coulabilité acceptable pour le procédé de frittage laser. L'aspect coalescence n'est pas discuté dans ce brevet, en particulier aucun exemple ne démontre que la coalescence est effective, modifiée voire améliorée par le traitement thermique.

WO2012047613 décrit également un traitement thermique appliqué plus particulièrement aux poudres de poly-éther-cétones-cétones (PEKK) consistant à exposer la poudre à un traitement thermique de plusieurs heures entre les températures de transition des différentes phases cristallines, plus particulièrement en se rapprochant de la température de fusion du polymère, correspondant à la forme cristalline présentant la transition à la plus haute température. La coulabilité de la poudre s'en trouve améliorée et la cristallinité résultante de ce traitement est conservée durant le procédé de frittage, conférant à l'objet fritté certaines propriétés physiques avantageuses, mais apparaissant insuffisantes pour certaines applications. L'aspect coalescence n'est pas discuté dans ce brevet, en particulier aucun exemple ne démontre que la coalescence est effective, modifiée voire améliorée par le traitement thermique.

Pour répondre aux besoins de disposer de poudres présentant une bonne coulabilité et une bonne coalescence, la demanderesse a conduit une série de tests mettant en évidence que pour les poly-arylène-éther-cétones, l'addition d'agent d'écoulement hydrophile permet, d'une part, une bonne coulabilité et que, d'autre part, cette coulabilité est conservée même après un séjour en atmosphère humide. Ce dernier résultat apparaît inattendu et très surprenant au regard de l'art antérieur (US 2004/0204531) .
En outre, la demanderesse a constatée que pour de telles compositions, la coalescence de ces poudres de poly-arylène-éther-cétones additivées d'agent d'écoulement hydrophile est supérieure à celles de poudres de poly-arylène-éther-cétones additivées d'agent découlement hydrophobe.
Il est connu de US 2011/039093 un matériau composite de résine fluorée comprenant 6 à 9% en poids de carbure de silicium (SiC) qui peut également comporter du PEEK. Le PEEK y est ajouté à titre d'additif de transformation.
Il est connu de EP 1 674 497 l'utilisation de poudres de PAEK comportant un absorbant de rayons infrarouges tels que différents composés carbonés.
Il est connu de DE 10 2007 016656 une poudre de PAEK traitée thermiquement pouvant comporter différents additifs, sans que la quantité desdits additifs ne soit précisée.
Il est connu de WO 2013/068686 un procédé de broyage de PAEK. Le document mentionne à titre d'additifs éventuels une silice telle que l'Aerosil, sans en préciser la quantité. Les silices vendues sous le nom d'Aerosil sont des silices pyrogénées, lesquelles peuvent être hydrophiles ou hydrophobes.

Il est connu de US 2009/280263 une poudre fine de PAEK poreux. Le document mentionne également des additifs, et notamment du SiO₂ par exemple Aerosil, sans en préciser la quantité.

### Résumé de l'invention:

L'invention concerne une composition comprenant de 99.6 à 99.99 % en poids d'au moins une poudre d'au moins une poly-arylène-éther-cétone et 0.01 à 0.4 % en poids d'un agent d'écoulement hydrophile, de préférence de 0.01 à 0.2 % en poids d'un agent d'écoulement hydrophile et, plus particulièrement, de préférence de 0.01 à 0.1 % en poids d'un agent d'écoulement hydrophile. Cet d'agent d'écoulement hydrophile est caractérisé par une prise de masse (quantité d'eau absorbée) après 5 jours de conditionnement à une humidité relative de 95% supérieure à 0.5%, de préférence supérieure à 0.8%. Cette prise de masse de l'agent d'écoulement est déterminée par mesure Karl Fisher après désorption de l'eau par un traitement de 15 min à 170°C, dans laquelle l'au moins une poly-arylène-éther-cétone est le PEKK présentant un pourcentage massique en motif téréphtalique par rapport à la somme des motifs téréphtalique et isophtalique compris entre 55% et 85%.

L'invention concerne également l'utilisation des compositions de l'invention ainsi que les objets fabriqués à l'aide de ces compositions, en particulier à l'aide d'un procédé de frittage laser.

### Description détaillée :

Les poly-arylène-éther-cétones (PAEK) utilisés dans l'invention comportent les motifs de formules suivantes:
(-Ar-X-) et (-Ar₁-Y-)
dans lesquelles :
Ar et Ar₁ désignent chacun un radical aromatique divalent ;
Une part minoritaire (<10%) de ces motifs peut être remplacée par des radicaux de valence supérieure à 2 pour introduire des branchements.
Ar et Ar₁ peuvent être choisis, de préférence, parmi le 1,3-phénylène, 1,4-phénylène, le 4,4'-biphénylène, le 1,4- naphthylène, le 1,5-naphthylène et le 2,6-naphthylène ;
X désigne un groupe électro-attracteur ; il peut être choisi, de préférence, parmi le groupe carbonyle et le groupe sulfonyle,
Y désigne un groupe choisi parmi un atome d'oxygène, un atome de soufre, un groupe alkylène, tel que -CH₂- et isopropylidène.

Dans ces motifs X et Y, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène.

Selon un mode de réalisation préféré, 100% des groupes X désignent un groupe carbonyle et 100% des groupes Y représentent un atome d'oxygène.

Plus préférentiellement, le poly-arylène-éther-cétone (PAEK) peut être choisi parmi :
- un poly-éther-éther-cétone également nommé PEEK comprenant des motifs de formule I : 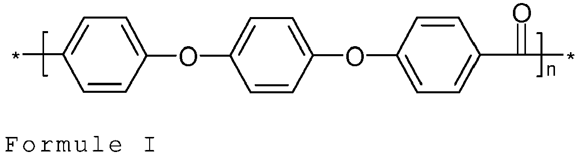 Les enchainements peuvent être totalement para (Formule I) mais on ne sortirait pas du cadre de l'invention en introduisant, partiellement ou totalement, des enchaînements méta . Deux exemples (liste non limitative) sont fournis ci-dessous : 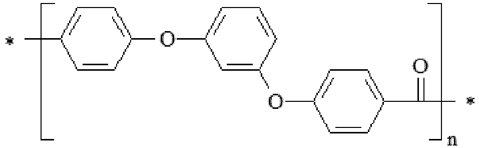 Ou encore : 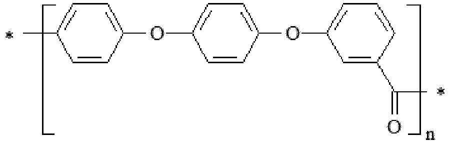
- un poly-éther-cétone également nommé PEK, comprenant des motifs de formule II : 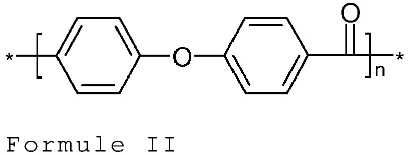
   De la même façon, les enchainements peuvent être totalement para (Formule II) mais on ne sortirait pas du cadre de l'invention en introduisant, partiellement ou totalement, des enchaînements méta : 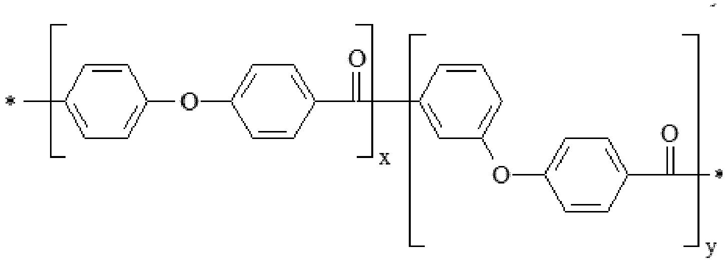 Ou 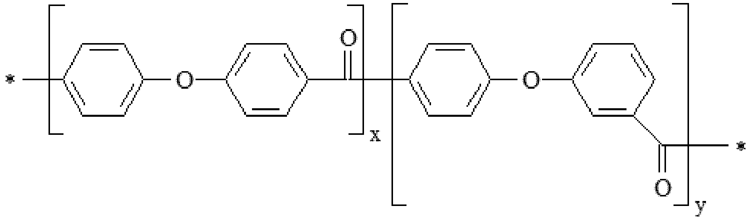
- un poly-éther-cétone-cétone également nommé PEKK, comprenant des motifs de formule IIIA, de formule IIIB et leur mélange : 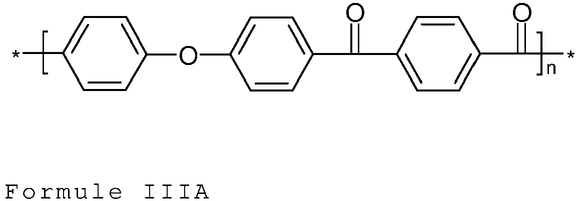 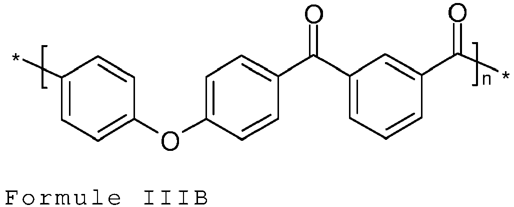
- et un poly-éther-éther-cétone-cétone également nommé PEEKK, comprenant des motifs de formules IV :

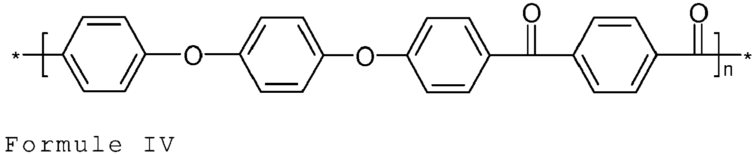

De la même façon on peut introduire des enchaînements méta dans cette structure sans sortir de l'invention.

D'autres arrangements du groupe carbonyle et de l'atome d'oxygène sont également possibles. On ne sortirait donc pas du cadre de l'invention par leur utilisation.

On peut, en outre, incorporer dans la structure un radical divalent du type phtalazinone de formule suivante :

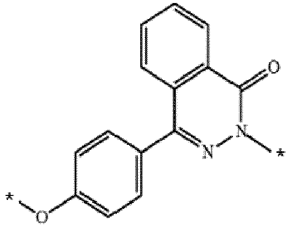

Le poly-arylène-éther-cétone utilisable selon l'invention peut être semi-cristallin ou amorphe. De préférence les poly-arylène-éther-cétones sont des Poly-éther-cétones-cétones comprenant un mélange des motifs IIIA et IIIB de telle sorte que le pourcentage massique en motif téréphtalique par rapport à la somme des motifs téréphtalique et isophtalique soit compris entre 55% et 85% et de préférence entre 55% et 70%, idéalement 60%. Par motif téréphtalique et isophtalique, on entend la formule des acides téréphtalique et isophtalique respectivement.

Ces poly-arylène-éther-cétones se présentent sous forme de poudres pouvant avoir été préparées par broyage ou précipitation.
L'au moins une poly-arylène-éther-cétone de la composition selon l'invention est le PEKK présentant un pourcentage massique en motif téréphtalique par rapport à la somme des motifs téréphtalique et isophtalique compris entre 55% et 85%.

On n'exclut pas dans le cadre de l'invention les mélanges de différentes poudres de poly-arylène-éther-cétones. Selon une préférence les mélanges de différentes poudres de poly-arylène-éther-cétones comprennent une poly-éther-cétone-cétone associée à une autre poly-arylène-éther-cétone ou un mélange de 2 PEKK de structure chimique différente. On associera ainsi une poly-arylène -éther- cétone à un PEK, PEEKEK, PEEK, PEKEKK, PEKK. Selon une forme préférée, on associera le PEKK avec PEK, PEEKEK, PEEK, PEKEKK ou un PEKK de formule chimique différente, le PEKK représentant plus de 50 % massique, borne comprise.

Les agents d'écoulement hydrophiles utilisés dans le cadre de l'invention peuvent être des pigments inorganiques choisis de préférence parmi les silices et les alumines. Les silices hydrophiles utilisées dans le cadre de l'invention sont constituées d'oxyde de silicium. Ce sont des silices pyrogénées sans traitement spécifique, à la différence des silices hydrophobes qui sont des silices pyrogénées ayant subi un traitement chimique tel qu'un greffage avec du diméthyl- chloro-silane. On ne sortirait pas du cadre de l'invention en utilisant des silices synthétisées par un autre mode de fabrication.

Les silices communément utilisées sont des produits commerciaux dont la dénomination commerciale est Aerosil® (fournisseur Evonik) ou Cab-o-Sil® (fournisseur Cabot). Ces silices sont composées de particules primaires nanomètriques (typiquement entre 5 et 50 nm pour les silices pyrogènées). Ces particules primaires sont associées pour former des agrégats. En utilisation comme agent d'écoulement, on retrouve les silices sous différentes formes (particules élémentaires et agrégats).

Les poudres ou mélanges de poudres comprenant des agents d'écoulement hydrophiles utilisés dans le cadre de l'invention peuvent, le cas échéant, être additivées ou contenir différents composés. Parmi ces composés, citons les charges renforçantes, notamment des charges minérales telles que le noir de carbone, des nanotubes, de carbone ou non, des fibres (verre, carbone..), broyées ou non, les agents stabilisants (lumière, en particulier UV, et chaleur), les azurants optiques, colorants, pigments, les additifs absorbeurs d'énergie (dont absorbeurs d'UV) ou une combinaison de ces charges ou additifs.

### Exemples :

### Mesure de la coulabilité :

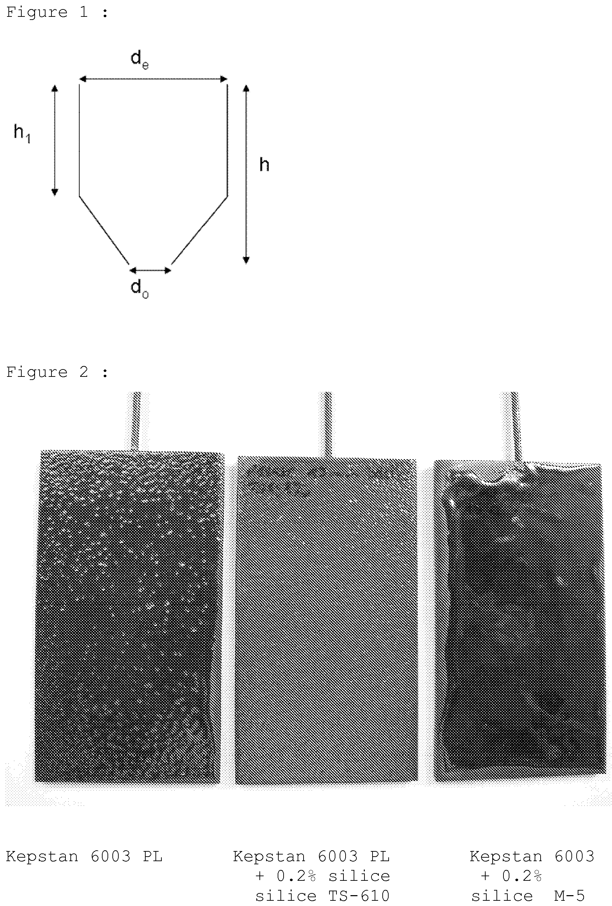

La coulabilité de ces poudres a été réalisée dans des entonnoirs en verre de la façon suivante :
- Remplir des entonnoirs en verre d'orifice 17 ou 12 mm (figure 1) avec la poudre jusqu'à 5 mm du bord. Boucher l'orifice du bas avec le doigt.

Avec pour entonnoir 12 mm:
dₑ=39,2 mm
dₒ=12 mm
h=106 mm
h₁=83 mm
et pour entonnoir 17 mm:
dₑ=42,0 mm
dₒ= 17 mm
h=112 mm
h₁=67 mm
   - Mesurer au chronomètre le temps d'écoulement de la poudre.
   - Si l'écoulement ne se fait pas, taper sur l'entonnoir à l'aide d'une spatule. Répéter l'opération si besoin.
   - Noter le temps d'écoulement et le nombre de coups tapés à l'aide de la spatule.

### Estimation de la coalescence :

La coalescence des poudres est estimée par le protocole suivant :
- dépôt de poudre sur une plaque d'acier
- mise au four, à 340°C pendant 15 minutes, de la plaque revêtue de poudre
- observation de la plaque revêtue après refroidissement après sortie du four

La coalescence sera jugée d'autant meilleure que la plaque d'acier sera devenue invisible suite à la coalescence/filmification de la poudre.

### Exemple 1 :

Une poudre Kepstan® 6003 PL de la société Arkema, contenant 60 % de motifs téréphtaliques par rapport à la somme des motifs téréphtalique et isophtalique, dont la taille de particule présente un dv50 de 50pm plus ou moins 5pm, a été additivée de 0.4% de silice CAB-O-Sil® TS-610 dans un robot de cuisine de type Magimix à grande vitesse pendant 100 secondes.

Le Dv50 est aussi appelé diamètre médian en volume qui correspond à la valeur de la taille de particule qui divise la population de particules examinée exactement en deux. Le Dv50 est mesuré selon la norme ISO 9276 - parties 1 à 6. Dans la présente description, on utilise un granulomètre Malvern Mastersizer 2000, et la mesure est faite en voie liquide par diffraction laser sur la poudre.

La silice CAB-O-Sil® TS-610 est une silice pyrogénée rendue hydrophobe par un traitement au diméthyl-chloro-silane. Elle sera notée par la suite « TS-610 ».

La poudre possède une excellente coulabilité (temps <10s, 0 coup pour un entonnoir 17mm) mais la coalescence, estimée comme décrit ci-dessus, est très faible, la plaque d'acier étant encore bien visible.

La silice peut donc être à un taux élevée un agent anti-coalescent.

### Exemple 2 :

Une poudre Kepstan® 6003 PL de la société Arkema, contenant 60 % de motifs téréphtaliques par rapport à la somme des motifs téréphtalique et isophtalique, dont la taille de particule présente un dv50 de 50pm plus ou moins 5pm a été additivée de silice CAB-O-Sil® TS-610 dans un robot de cuisine de type Magimix à grande vitesse durant 100 secondes.

Un second échantillon de la même poudre Kepstan est additivé de silice CAB-O-Sil® M-5 selon le même protocole. La silice CAB-O-Sil® M-5 est une silice pyrogénée hydrophile qui n'a pas fait l'objet de traitement spécifique. Elle sera notée par la suite « M-5 ».

Les résultats de coulabilité des deux poudres additivées sont donnés au tableau 1 comparativement à la poudre sans silice.

**Tableau 1**

| | | **Sans silice** | | | | |
|---|---|---|---|---|---|---|
| | | | **0,1 % TS 610** | **0,2% TS 610** | **0,1% M5** | **0,2% M5** |
| Coulabilité entonnoir 12 | Temps(s) | 90 | 60 | 12 | 80 | 22 |
| | Nombre coups | multi | multi | 3 | multi | 14 |
| Coulabilité entonnoir 17 mm | Temps (s) | 48 | 13 | 9 | 22 | 12 |
| | Nombre coups | 40 | 3 | 0 | 10 | 1 |

Le terme multi est employé lorsque l'on tape sur l'entonnoir continuellement.

On constate que les deux types de silice améliorent la coulabilité et sont donc 2 agents d'écoulement potentiels pour le PEKK.

### Exemple 3:

Une autre poudre Kepstan® 6003 PL de la société Arkema est additivée avec le Magimix soit de 0.05% silice CAB-O-Sil® TS-610 soit de 0.05% CAB-O-Sil® M-5.

Ces poudres sont d'une part stockées à 23°C et 50% de RH jusqu'à saturation en humidité (cas, par exemple, d'un stockage de la poudre avant utilisation en machine). Le taux d'humidité est mesuré par la méthode Karl Fischer (désorption de l'eau de la poudre Kepstan® par un traitement de 20 min à 250°C). D'autre part, les poudres sont séchées pendant 1 nuit à 140°C. Le taux d'humidité est également mesuré par la méthode Karl Fischer (même protocole que ci-dessus).

Les résultats de coulabilité des deux poudres additivées avec des taux d'humidité différents sont donnés au tableau 2.

**Tableau 2**

| Taux d'humidité | | **0,05% TS 610** | | **0,05% M5** | |
|---|---|---|---|---|---|
| | | 0.25% | 0.5% | 0.25% | 0.53% |
| Coulabilité entonnoir 17 mm | Temps (s) | 7 | 5 | 6 | 6 |
| | Nombre coups | 0 | 0 | 0 | 0 |

Les taux d'humidité de 0.5% et correspondent à l'état du matériau saturé en humidité à 23°C et 50% de RH.

Les taux d'humidité de 0.25% correspondent à l'état du matériau après séchage à 140°C pendant 1 nuit.

Les taux d'humidité ne sont pas affectés par la nature de la silice.

Il ressort que, quelle que soit la silice utilisée, la coulabilité n'est pas affectée par le taux d'humidité. En particulier, aucune détérioration de la coulabilité n'est observée pour des poudres saturées en humidité (23°C, 50% de RH) même dans le cas de l'utilisation d'une silice hydrophile en tant qu'agent d'écoulement.

### Exemple 4 :

Trois échantillons de l'exemple 2 (non additivé, additivé de 0.2% de silice hydrophobe (TS-610), additivé de 0.2% de silice hydrophile (M-5)) sont déposés sur trois plaques d'acier.

Ces plaques revêtues sont disposées dans un four maintenu à 340°C durant 15 minutes.

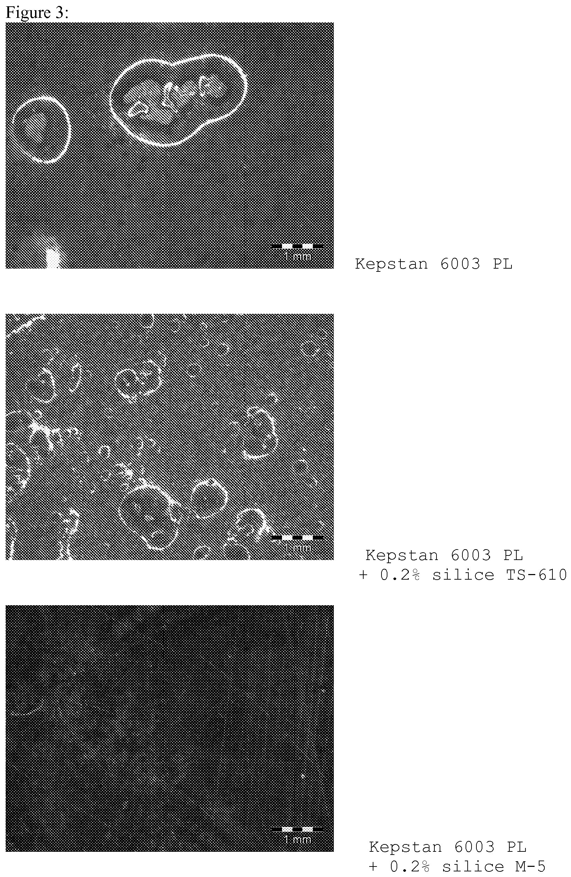

Elles sont ensuite refroidies puis on observe, visuellement et sous binoculaire (Stemi SV11 de Zeiss), le revêtement de PEKK à la surface des plaques (figures 2, et 3).

Visuellement (figure 2), on observe une surface beaucoup plus lisse lorsque la silice hydrophile (M-5) est utilisée démontrant la bonne coalescence de la poudre durant le passage au four. Sans silice et avec la silice TS-610, le revêtement n'est pas continu et, par conséquent, la plaque d'acier reste localement visible.

Les clichés en binoculaire (figure 3) confirment les observations précédentes : il existe des zones où localement on voit toujours la plaque d'acier dans les cas de la poudre non additivée et de la poudre additivée avec 0.2% de silice TS-610, tandis que, dans le cas de la poudre additivée de silice M-5, la plaque d'acier n'est plus visible. Cela confirme la meilleure coalescence de la poudre additivée de M-5 durant le passage au four.

## Revendications

1. Composition comprenant de 99.6 à 99.99 % en poids d'au moins une poudre d'au moins une poly-arylène-éther-cétone et 0.01 à 0.4 % en poids d'un agent d'écoulement hydrophile, le dit agent d'écoulement hydrophile étant **caractérisé par** une prise de masse (quantité d'eau absorbée) après 5 jours de conditionnement à une humidité relative de 95% supérieure à 0.5%, la dite prise de masse de l'agent d'écoulement étant déterminée par mesure Karl Fisher après désorption de l'eau par un traitement de 15 min à 170°C, dans laquelle l'au moins une poly-arylène-éther-cétone est le PEKK présentant un pourcentage massique en motif téréphtalique par rapport à la somme des motifs téréphtalique et isophtalique compris entre 55% et 85%.

2. Composition selon la revendication 1 dans laquelle l'agent d'écoulement hydrophile est une silice hydrophile.

3. Composition selon la revendication 1 dans laquelle en plus du PEKK on adjoint une poudre de PEK, PEEKEK, PEEK, PEKEKK, PEKK de structure chimique différente, le PEKK représentant plus de 50 % massique, borne comprise.

4. Composition selon la revendication 1 contenant une charge.

5. Composition selon la revendication 1 contenant au moins un additif.

6. Utilisation d'une composition selon une des revendications 1 à 5 dans un procédé de frittage laser.

7. Objet obtenu à partir d'une composition selon une des revendications 1 à 5.

## Patentansprüche

1. Zusammensetzung, umfassend 99,6 bis 99,99 Gew.-% mindestens eines Pulvers mindestens eines Polyaryletherketons und 0,01 bis 0,4 Gew.-% eines hydrophilen Fließmittels, wobei das hydrophile Fließmittel durch eine Massenzunahme (Menge von absorbiertem Wasser) nach 5 Tagen Konditionierung bei einer relativen Feuchte von 95 % von mehr als 0,5 % gekennzeichnet ist, wobei die Massenzunahme des Fließmittels durch Karl-Fischer-Messung nach Desorption des Wassers durch eine 15-minütige Behandlung bei 170 °C bestimmt wird, wobei es sich bei dem mindestens einen Polyaryletherketon um PEKK mit einem Massenprozentanteil an Terephthalsäure-Einheiten, bezogen auf die Summe der Terephthalsäure- und Isophthalsäure-Einheiten, zwischen 55 % und 85 % handelt.

2. Zusammensetzung nach Anspruch 1, wobei es sich bei dem hydrophilen Fließmittel um eine hydrophile Kieselsäure handelt.

3. Zusammensetzung nach Anspruch 1, wobei neben dem PEKK ein PEK-, PEEKEK-, PEEK-, PEKEKK- oder PEKK-Pulver mit anderer chemischer Struktur hinzugefügt wird, wobei das PEKK mehr als 50 Massen-% einschließlich des Grenzwerts ausmacht.

4. Zusammensetzung nach Anspruch 1, die einen Füllstoff enthält.

5. Zusammensetzung nach Anspruch 1, die mindestens ein Additiv enthält.

6. Verwendung einer Zusammensetzung nach einem der Ansprüche 1 bis 5 bei einem Lasersinterverfahren.

7. Gegenstand, erhalten aus einer Zusammensetzung nach einem der Ansprüche 1 bis 5.

## Claims

1. Composition comprising from 99.6% to 99.99% by weight of at least one powder of at least one polyarylene ether ketone and 0.01% to 0.4% by weight of a hydrophilic flow agent, said hydrophilic flow agent being **characterized by** a gain in mass (amount of water absorbed), after 5 days of conditioning at a relative humidity of 95%, of greater than 0.5%, said gain in mass of the flow agent being determined by Karl Fischer measurement after desorption of the water by a 15-minute treatment at 170°C, in which the at least one polyarylene ether ketone is PEKK having a mass percentage of terephthalic units relative to the sum of the terephthalic and isophthalic units of between 55% and 85%.

2. Composition according to Claim 1, in which the hydrophilic flow agent is a hydrophilic silica.

3. Composition according to Claim 1, in which, in addition to the PEKK, a PEK, PEEKEK, PEEK, PEKEKK or PEKK powder of different chemical structure is added, the PEKK representing more than 50% by mass, limit inclusive.

4. Composition according to Claim 1, containing a filler.

5. Composition according to Claim 1, containing at least one additive.

6. Use of a composition according to one of Claims 1 to 5 in a laser sintering process.

7. Object obtained using a composition according to one of Claims 1 to 5.
